(19) Europäisches Patentamt / European Patent Office / Office européen des brevets

(11) **EP 1 949 548 B1**

(12) **FASCICULE DE BREVET EUROPEEN**

(45) Date de publication et mention
de la délivrance du brevet:
**25.03.2009 Bulletin 2009/13**

(21) Numéro de dépôt: **06831083.8**

(22) Date de dépôt: **07.11.2006**

(51) Int Cl.:
*H04B 1/69* (2006.01)

(86) Numéro de dépôt international:
**PCT/FR2006/002481**

(87) Numéro de publication internationale:
**WO 2007/054640 (18.05.2007 Gazette 2007/20)**

(54) **Procédé de détection de trajets en transmission impulsionnelle et dispositif correspondant**

Verfahren zum Erkennen von Wegen bei der Impulsübertragung und Einrichtung zum ausführen des Verfahrens

Method for detecting paths in pulse transmission and a device for carrying out said method

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **14.11.2005 FR 0511512**

(43) Date de publication de la demande:
**30.07.2008 Bulletin 2008/31**

(73) Titulaire: **France Télécom**
**75015 Paris (FR)**

(72) Inventeurs:
• **SCHWOERER, Jean**
**F-38000 Grenoble (FR)**
• **MISCOPEIN, Benoît**
**F-38000 Grenoble (FR)**

(74) Mandataire: **Fréchède, Michel**
**Cabinet Plasseraud**
**52 rue de la Victoire**
**75440 Paris Cedex 09 (FR)**

(56) Documents cités:
**US-A- 5 832 035          US-B1- 6 556 621**

• **WOO CHEOL CHUNG ET AL: "An accurate ultra wideband (uwb) ranging for precision asset location" ULTRA WIDEBAND SYSTEMS AND TECHNOLOGIES, 2003 IEEE CONFERENCE ON NOV. 16-19, 2003, PISCATAWAY, NJ, USA,IEEE, 16 novembre 2003 (2003-11-16), pages 389-393, XP010684141 ISBN: 0-7803-8187-4**

**Description**

L'invention concerne un procédé et un dispositif de détection de trajets en transmission impulsionnelle.

La technique émergente de transmission en radio impulsionnelle utilise l'émission de l'information à transmettre au moyen d'impulsions et met, notamment, en oeuvre des récepteurs ultra large bande, désignés récepteurs UWB pour Ultra Wide Band en anglais.

Ainsi un signal impulsionnel n'est pas un signal continu, mais un train d'impulsions brèves, moins d'une nanoseconde par exemple, et de faible rapport cyclique.

Durant la phase d'acquisition de synchronisation, en tirant partie de la connaissance a priori d'une séquence, le récepteur identifie cette séquence, positionne son début dans le temps et en extrait la référence de temps recherchée.

Dès lors, le récepteur a détecté et s'est verrouillé sur un trajet de propagation.

Or, un canal, notamment le canal radio, peut comporter de nombreux trajets de propagation, de plusieurs dizaines à plusieurs centaines, ce qui a pour effet de diluer l'énergie sur l'ensemble de ces trajets.

Dans une telle situation, le traitement optimal d'un seul trajet ne permet, au mieux, que de récupérer quelques pourcents de l'énergie électrique disponible dans le canal.

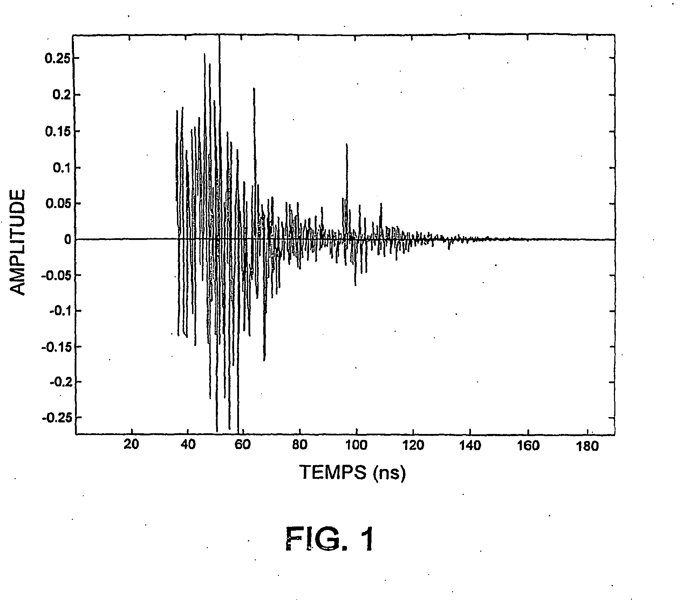

A titre illustratif, la figure 1 représente la réponse impulsionnelle d'un canal radio en réception UWB dans le cas d'un canal sans trajet direct NLOS (Non Line Of Sight en anglais) confiné, désigné indoor NLOS en anglais. La figure 1 est graduée en amplitude relative sur l'axe des ordonnées et en nanosecondes sur l'axe des abscisses.

Suivant les applications, il est donc utile de traiter plusieurs trajets de propagation, afin de recombiner ces derniers de manière constructive, et, ainsi, améliorer le rapport signal à bruit disponible à la prise de décision.

Les solutions actuellement connues de l'état de la technique dans le domaine de la transmission radio mettent essentiellement en oeuvre des techniques de corrélation glissante, pour améliorer la qualité de liaison.

A titre d'exemple de traitement par corrélation glissante dans des récepteurs UWB, on pourra utilement se reporter à la demande de brevet PCT WO 2004/066517.

La plupart du temps, une fois que le récepteur a permis de détecter un trajet suffisamment fort, ce récepteur peut se synchroniser sur ce dernier. La corrélation glissante permet aussi, lorsqu'elle est menée en totalité, de faire apparaître d'autres trajets de propagation, sous forme de pics de corrélation secondaire. Le document US 5,832,035 présente une méthode avec corrélation glissante.

Différents algorithmes de traitement permettent ensuite de parcourir le résultat de corrélation glissante, dans le but d'identifier et de caractériser d'autres trajets de propagation, tel que l'algorithme itératif désigné « clean » par exemple.

Par la suite, lors de la mise à jour de la sélection des trajets, effectuée notamment en raison de la variabilité du canal de transmission, une corrélation glissante est alors recalculée, puis une nouvelle recherche de trajets dans le résultat de corrélation glissante obtenu est conduite.

Le mode opératoire précité souffre de nombreux inconvénients, en raison de son extrême lourdeur calculatoire.

Notamment, le nombre de séquences $N_s$ nécessaires à l'obtention d'une synchronisation, dans ces conditions, peut prendre des valeurs très importantes, ce qui implique une durée de convergence vers un état de synchronisation importante.

Il n'est donc pas possible de renouveler fréquemment un résultat de corrélation glissante, pour obtenir une mise à jour de la sélection de trajet.

Bien que diverses améliorations aient été apportées à la solution précitée, par l'utilisation de codes de type JPL pour Jet Propulsion Laboratory en anglais par exemple, ou par l'exécution d'un calcul grossier de corrélation glissante, afin de dégager des zones d'intérêt sur lesquelles le récepteur calcule ensuite une corrélation fine ainsi que décrit par la demande de brevet FR 05 01283 déposée le 08/02/2005 au nom de la demanderesse. Dans leur principe, toutes ces solutions et leur variante mettent en oeuvre nécessairement un récepteur cohérent, à l'exclusion, notamment, de tout récepteur opérant en détection d'énergie.

Dans tous les cas, le temps de calcul et les ressources corrélativement nécessaires restent importantes et pèsent de façon significative dans la complexité d'un récepteur UWB en radio impulsionnelle.

La présente invention a pour objet de réduire, voire de s'affranchir des inconvénients et limitations des solutions de l'art antérieur précitées, par suppression du processus de corrélation glissante et remplacement de ce dernier par un processus de détection de trajets.

Le procédé de détection de trajets de propagation en transmission par impulsions, le signal reçu incluant des impulsions sur des temps symbole, objet de l'invention, est remarquable en ce que suite à la synchronisation de la réception de ces impulsions sur des impulsions auxquelles est associé un trajet, ce procédé inclut au moins les étapes consistant à déterminer les instants d'arrivée d'au moins une partie de ces impulsions d'un même temps symbole courant, générer des hypothèses de trajet en affectant aux impulsions datées sur le temps symbole courant un score initial, déterminer les instants d'arrivée d'au moins une partie de ces impulsions d'au moins un temps symbole suivant ce temps symbole courant, confronter de manière relative l'instant d'arrivée des impulsions du temps symbole suivant avec les instants d'arrivée des hypothèses de trajet, mettre à jour les scores de la confrontation relative.

Le procédé objet de l'invention est en outre remarquable en ce que la détermination d'un instant d'arrivée des impulsions consiste au moins à détecter l'enveloppe des impulsions vis-à-vis d'une valeur de seuil, et, sur détection positive, à associer au moins un instant d'arrivée à une impulsion détectée.

L'utilisation de la détection d'enveloppe et du seuillage permet de réduire les calculs et est compatible avec l'utilisation d'un récepteur à détection d'énergie.

Le procédé objet de l'invention est en outre remarquable en ce que la confrontation relative consiste au moins à établir des fenêtres temporelles de largeur déterminée autour des instants d'arrivée des impulsions associées à l'hypothèse de trajet, et à vérifier si les impulsions du temps symbole suivant sont dans au moins une des fenêtres temporelles.

L'utilisation de fenêtres temporelles permet de réduire le nombre d'hypothèses engendrées et en conséquence les moyens nécessaires à la mise en oeuvre du procédé de détection de trajets objet de l'invention.

Le procédé objet de l'invention est en outre remarquable en ce qu'il inclut au moins la génération d'une nouvelle hypothèse de trajet lors d'une discordance relative entre l'instant d'arrivée d'une impulsion du temps symbole suivant et les instants d'arrivée des hypothèses de trajet, en affectant à l'impulsion datée du temps symbole suivant un score initial.

Le procédé objet de l'invention est également remarquable en ce que la mise à jour du score affecté à chaque hypothèse de trajet après comparaison sur N temps symbole suivants inclut au moins la fusion des hypothèses de trajet dont les fenêtres temporelles de réception se chevauchent, l'instant d'arrivée le plus récent et le score le plus élevé étant conservé.

La génération de nouvelle hypothèse de trajet sur les temps symbole suivant permet de récupérer des trajets soit atténués soit noyés dans le bruit sur le temps symbole courant et donc de gagner en précision sur la détection de trajet. Ceci a pour conséquence un gain en qualité lors de l'exploitation, notamment en qualité de transmission, lorsque les trajets permettent la synchronisation d'un système de transmission.

Le procédé objet de l'invention est également remarquable en ce qu'il consiste à actualiser les hypothèses de trajet et leur score en réitérant les étapes de génération d'hypothèses de trajet et d'affectation de score, par substitution au temps symbole courant d'un temps symbole suivant le temps symbole courant.

L'actualisation des hypothèses de trajet permet de conserver une bonne précision sur les trajets détectés et, par conséquent, d'adapter l'exploitation, notamment la réception, à la variabilité du canal de transmission.

Le procédé objet de l'invention est enfin remarquable en ce qu'il consiste à remplacer le temps symbole par une subdivision temporelle du temps symbole

Le remplacement du temps symbole par une subdivision de ce dernier permet d'utiliser toutes les impulsions émises dans un temps symbole, lorsque plusieurs impulsions sont émises par temps symbole et, par conséquent, d'utiliser plus d'informations sur un temps symbole pour détecter les trajets, ce qui améliore la détection de trajets et, donc, la qualité de la transmission.

L'invention concerne en outre un récepteur de signaux émis par impulsions, comprenant au moins une antenne de réception d'impulsions, remarquable en ce que, outre un module de synchronisation de la réception sur une impulsion reçue, il inclut au moins un module de détermination des instants d'arrivée d'au moins une partie des impulsions en fonction du résultat de la confrontation relative temps symbole courant un module de génération d'hypothèses de trajet, en affectant aux impulsions datées sur le temps symbole courant un score initial, des moyens de détermination des instants d'arrivée d'un moins une partie des impulsions d'un moins un temps symbole suivant le temps symbole courant ; un module ,de confrontation relative des instants d'arrivée des impulsions d'un temps symbole suivant avec les instants d'arrivée des hypothèses de trajet et un module de mise à jour des scores en fonction du résultat de la confrontation relative.

Le procédé et le récepteur objets de l'invention trouvent application en transmission, notamment radio, impulsionnelle, par exemple pour la communication, ainsi qu'à la détection de trajets multiples dans les applications de géolocalisation.

Ils seront mieux compris à la lecture de la description et à l'observation des dessins ci-après dans lesquels, outre la figure 1 relative à l'art antérieur :

- la figure 2 représente, à titre illustratif, un organigramme des étapes essentielles de mise en oeuvre du procédé de détection de trajets de propagation en transmission impulsionnelle, objet de la présente invention ;
- la figure 3A représente, à titre illustratif, un détail de mise en oeuvre de l'étape A de détermination des instants d'arrivée de la figure 2, pour le temps symbole courant ;
- la figure 3B représente, à titre illustratif, un détail de mise en oeuvre de l'étape D consistant à confronter de mamnière relative les instants d'arrivée des impulsions d'un temp symbole suivant avec les instants d'arrivée des hypothèses de trajet ;
- la figure 3C représente, à titre illustratif, un détail de mise en oeuvre d'un processus de mise à jour du score affecté à chaque hypothèse de trajet par fusion des hypothèses de trajet dont les fenêtres temporelles de réception se chevauchent;

- la figure 3D représente, à titre illustratif, un détail de mise en oeuvre d'un processus de mise à jour par classement du score affecté à chaque hypothèse de trajet, dans une application de communication en radio impulsionnelle ;
- la figure 4 représente, à titre illustratif, un récepteur conforme à l'objet de la présente invention.

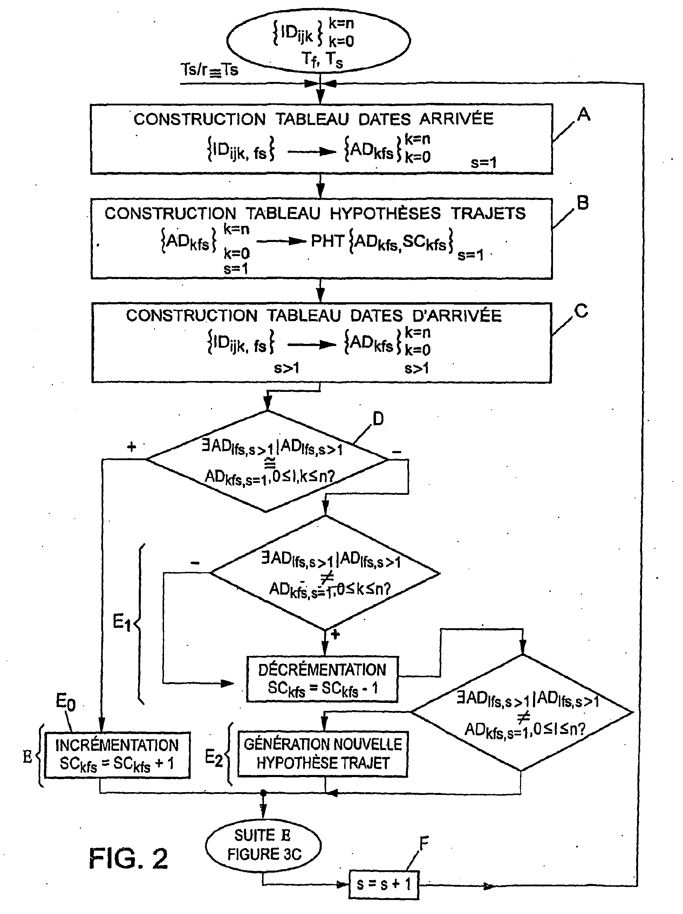

Une description plus détaillée du procédé de détection de trajet de propagation en transmission par impulsions, objet de l'invention, sera maintenant donnée en liaison avec la figure 2 et les figures suivantes.

Le procédé objet de l'invention s'applique à un signal reçu, notamment en bande UWB, incluant des impulsions, par exemple des impulsions directes et des impulsions secondaires, sur chaque temps symbole $T_s$ successif.

La mise en oeuvre du procédé objet de l'invention est applicable suite à la synchronisation de la réception des impulsions précitées sur une ou plusieurs impulsions auxquelles est associé un trajet principal.

De manière plus particulière, on indique que la notion de synchronisation de la réception correspond à une situation où des impulsions sont reçues, se répètent sur chaque intervalle trame successif $T_f$, sans changement, en référence à la description précédemment mentionnée. Cette absence de changement étant comprise en l'absence de changement des conditions de propagation du canal de transmission, c'est-à-dire sur un temps relativement bref, égal à plusieurs temps symboles.

La notion de synchronisation peut correspondre à la synchronisation d'un récepteur de l'art antérieur sur une impulsion dite principale dont l'amplitude est maximale par exemple.

En référence à la figure 2, et pour une succession d'impulsions après synchronisation et notée :

$$\left\{ID_{ijk}\right\}_{k=0}^{k=n}$$

et, pour des temps symboles $T_s$ successifs et des temps de trame $T_f$ compris dans le temps symbole précité, le procédé consiste à déterminer les instants d'arrivée d'au moins une partie des impulsions d'un même temps symbole courant, en une étape A, par exemple en construisant un tableau des dates d'arrivée des impulsions d'un même temps symbole courant tel qu'indiqué dans la figure 2. Sur la figure 2 et pour l'initialisation du procédé objet de la présente invention, le temps symbole courant est arbitrairement égal au premier temps symbole considéré obtenu après synchronisation, soit pour s=1.

L'étape de construction A du tableau des instants d'arrivée est notée :

$$\left\{ID_{ijk,fs}\right\} \rightarrow \left\{AD_{kfs}\right\}_{k=0}^{k=n}$$

Dans la relation précédente, on indique que $AD_{kfs}$ désigne l'instant d'arrivée de l'impulsion $ID_{ijk,fs}$, k représentant le rang de l'impulsion dans le temps symbole considéré et f représentant le rang de la trame incluse dans le temps symbole considéré.

Le tableau des instants d'arrivée peut être constitué par toute structure de données permettant la mise en correspondance bi-univoque entre une impulsion déterminée $ID_{ijk,fs}$ et l'instant d'arrivée $AD_{kfs}$ de celle-ci. Cette structure de données peut être formée par une liste, un tableau ou un réseau de données.

L'étape A est suivie d'une étape B consistant à générer des hypothèses de trajet, notamment en construisant, à partir du tableau des dates d'arrivée, un tableau des hypothèses de trajet de propagation des impulsions émises dans le canal de transmission comme illustré sur la figure 2. On comprend en effet que, dès l'émission d'une impulsion au niveau de l'émetteur, notamment radio, par impulsions, cette impulsion est soumise en fonction des conditions de propagation dans le canal de transmission à des trajets multiples, chaque impulsion reçue représentant donc, en fonction du temps d'arrivée de cette dernière, un trajet potentiel défini par une hypothèse de trajet correspondante.

Selon un aspect remarquable du procédé objet de l'invention, chaque hypothèse de trajet est générée en affectant aux impulsions datées à la réception sur le temps symbole courant un score $SC_{kfs}$ avec une valeur initial, appelé par abus de langage score initial.

A l'étape B, l'opération de construction du tableau des hypothèses de trajet est notée :

$$\left\{ADkfs\right\}_{k=0,s=1}^{k=n} \rightarrow PHT\left\{AD_{kfs}\right\}_{s=1}$$

Dans la relation précédente, symbolisant la construction du tableau des hypothèses de trajet, on indique que :

- PHT {$AD_{kfs}$, $SC_{kfs}$} désigne le trajet de propagation associé à l'instant d'arrivée $AD_{kfs}$ de l'impulsion $ID_{ijk,fs}$, impulsion et ;
- $SC_{kfs}$ désigne le score associé à une impulsion, notamment à toute impulsion, dont l'instant d'arrivée a été déterminé, l'impulsion étant de ce fait datée.

Suite à l'étape B représentée en figure 2, le procédé objet de l'invention est remarquable en ce qu'il consiste, pour un nombre déterminé de temps symbole suivant le temps symbole courant, c'est-à-dire pour s>1, à déterminer les instants d'arrivée d'au moins une partie des impulsions, notamment chaque impulsion, d'au moins un temps symbole suivant ledit temps symbole courant, notamment de chaque temps symbole suivant, à une étape C, par exemple, en construisant un tableau des dates d'arrivée de chaque temps symbole suivant comme l'illustre la figure 2.

A l'étape C de la figure 2, l'opération correspondante est notée :

$$\left\{ID_{ijk.fs}\right\}_{s)1} \rightarrow \left\{AD_{kfs}\right\}_{k=0,s)1}^{k=n}$$

On comprend que l'opération exécutée à l'étape C, consistant à construire un tableau des dates d'arrivée des impulsions de chaque temps symbole suivant est, en particulier, une opération exécutée de la même manière que l'étape A.

L'étape C précitée est alors suivie d'une étape D consistant à confronter de manière relative les instants d'arrivée des impulsions des temps symboles suivants, notamment des temps symboles successifs suivants, avec les instants d'arrivée des hypothèses de trajet, afin de vérifier une correspondance probable des impulsions précitées avec une des hypothèses.

A l'étape D de la figure 2, l'opération de confrontation est représentée par le test selon la relation.

$$\exists \left\{AD_{kfs}\right\}_{k=0,s)1}^{k=n} \cong AD_{kfs,s=1} \ ?$$

La notion de correspondance relative des instants d'arrivée s'entend de la vérification de la correspondance des instants d'arrivée précités compte tenu d'une marge d'erreur prédéterminée. Cette marge d'erreur pouvant être égale à zéro.

L'étape D est alors suivie d'une étape E, comporte la mise à jour le score affecté à toute hypothèse de trajet en fonction du résultat de la confrontation relative, pour engendrer un ensemble d'hypothèses de trajet et leur score associé pertinent.

Dans une première variante de l'étape E, cette mise à jour des scores comporte la mise à jour de la valeur du score $SC_{kfs}$ en fonction de la correspondance relative d'au moins une impulsion de temps symbole suivant avec une hypothèse de trajet.

Dans une deuxième variante de l'étape E, cette mise à jour des scores comporte la mise à jour de la valeur du score $SC_{kfs}$ en fonction de la discordance relative des impulsions de temps symbole suivant avec au moins une hypothèse de trajet.

Dans une troisième variante, l'étape E comporte en outre, la génération de nouvelle hypothèse de trajet dans le cas de discordance relative d'une impulsion de temps symbole suivant avec les hypothèses de trajet. Dans une quatrième variante, l'étape E comporte les caractéristiques de la deuxième variante de l'étape E et/ou les caractéristiques de la troisième variante de l'étape E et/ou les caractéristiques de la quatrième variante de l'étape E.

Un mode opératoire spécifique non limitatif de l'étape de mise à jour E est représenté de manière détaillée sur la figure 2.

Ainsi que représenté sur la figure précitée, sur réponse positive au test de l'étape D, c'est-à-dire lors d'une correspondance relative d'une impulsion de temps symbole suivant avec au moins une des hypothèses de trajet, c'est-à-dire lorsque la relation :

$$\exists AD_{lfs,s)1} / AD_{lfs,s)1} \cong AD_{kfs,s=1}, 0 \leq l,k \leq n \ ?$$

est vérifiée, alors on procède, en une étape $E_0$, à une incrémentation de la valeur de score $SC_{kfs}$, l'incrémentation correspondante pouvant consister à ajouter la valeur 1 à la valeur de score précitée.

Cette opération est représentée par la relation $SC_{kfs} = SC_{kfs} + 1$ à l'étape $E_0$ de la figure 2.

Au contraire, sur réponse négative au test D de la figure 2, c'est-à-dire lors d'une discordance relative, alors on procède en une étape $E_1$ (facultative) à une décrémentation du score alloué à l'hypothèse de trajet correspondante si aucune impulsion d'un temps symbole suivant ne correspond à une hypothèse de trajet, c'est-à-dire lorsque la relation

$$\exists AD_{kfs,s=1} / \{AD_{lfs,s>1}\} \neq AD_{kfs,s=1}, 0 \leq k \leq n ?$$

est vérifiée.

L'opération correspondante est notée $SC_{kfs} = SC_{kfs} - 1$ à l'étape $E_1$ de la figure 2.

Dans une autre variante de l'invention, le score est décrémenté lors d'une correspondance relative et incrémenté lors d'une discordance relative (l'incrémentation étant alors facultative).

Dans l'hypothèse d'une discordance relative entre une impulsion de temps symbole suivant avec les hypothèses de trajet, alors l'impulsion de temps symbole suivant est utilisable elle-même pour générer une nouvelle hypothèse de trajet.

Dans ces conditions, l'étape $E_1$ est alors suivie d'une étape $E_2$ (facultative) comportant la vérification de l'existence d'une impulsion de temps suivant ne correspondant à aucune hypothèse de trajet, c'est-à-dire la vérification de la relation suivante:

$$\exists AD_{(fs,s)1} / AD_{(fs,s)1} \neq \{AD_{kfs,s=1}\}, 0 \leq l \leq n ?$$

Et la génération une nouvelle hypothèse de trajet correspondant à l'instant d'arrivée $AD_{kfs, s>1}$ de l'impulsion de temps symbole suivant précité.

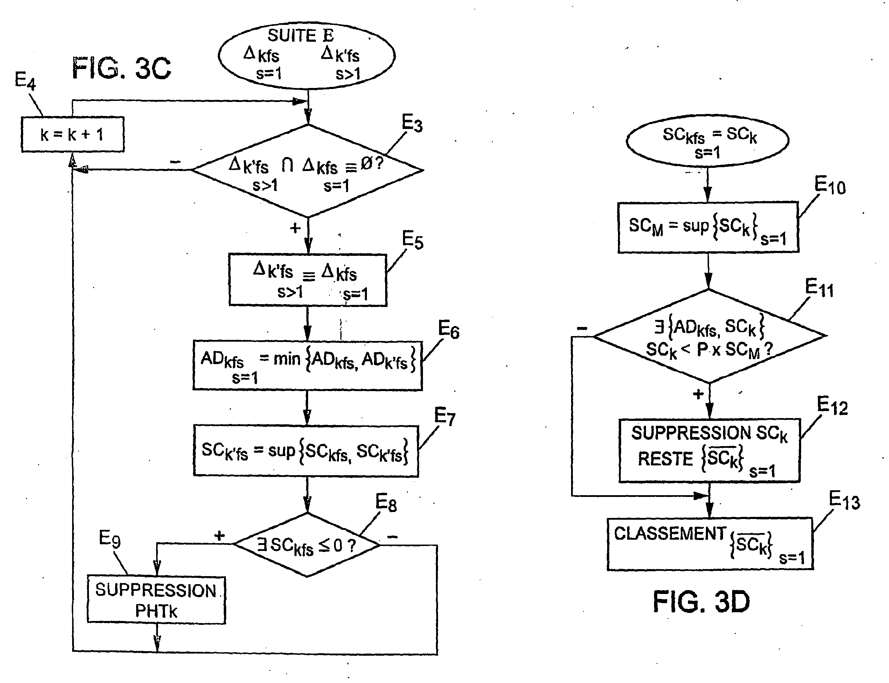

L'étape E peut alors être suivie d'une suite de mise à jour du score affecté désigné « Suite E Figure 3c » sur la figure 2, cette suite étant toutefois facultative.

Bien entendu, le procédé objet de la présente invention peut être mis en oeuvre sur le temps symbole courant, soit s=1, et sur une pluralité N de temps symbole suivant.

Toutefois, et selon une mise en oeuvre particulièrement avantageuse du procédé objet de l'invention, celui-ci peut être mis en oeuvre de manière adaptative de façon à actualiser les hypothèses de trajet et leur score associé en réitérant les étapes de génération d'hypothèse de trajet et d'affection de score (étapes A à E), par substitution au temps symbole courant s=1 d'un temps symbole suivant le temps symbole courant, par exemple s=s+1 temps symbole suivant immédiatement le temps symbole courant ou ou s=s+n nième temps symbole suivant le temps symbole courant.

Cette opération est représentée par l'étape F de la figure 2 par l'incrémentation s=s+1 consistant à poursuivre l'ensemble du processus, le temps symbole courant devenant le temps symbole s=2, incrémenté successivement et les temps symbole suivants devenant successivement les temps symbole 3 à N+1 et ainsi de suite, par retour, suite à l'étape F, à l'étape A de la figure 2.

On comprend que par une mise en oeuvre, telle que représentée en figure 2, du procédé de la présente invention, cette mise en oeuvre permet de manière particulièrement avantageuse d'adapter la réception à la variabilité du canal de transmission. La valeur de n sera donc fonction de la variabilité du canal: plus le canal variera rapidement, plus n sera proche ou égale à 1 permettant ainsi une actualisation tout les temps symboles ou pratiquement; et plus le canal variera lentement, plus n sera grand permettant d'actualiser de manière très espacé. Ainsi le rythme de l'actualisation peut être adapté au type de canal, permettant ainsi de réduire les calculs d'actualisation à ceux utiles pour suivre le canal.

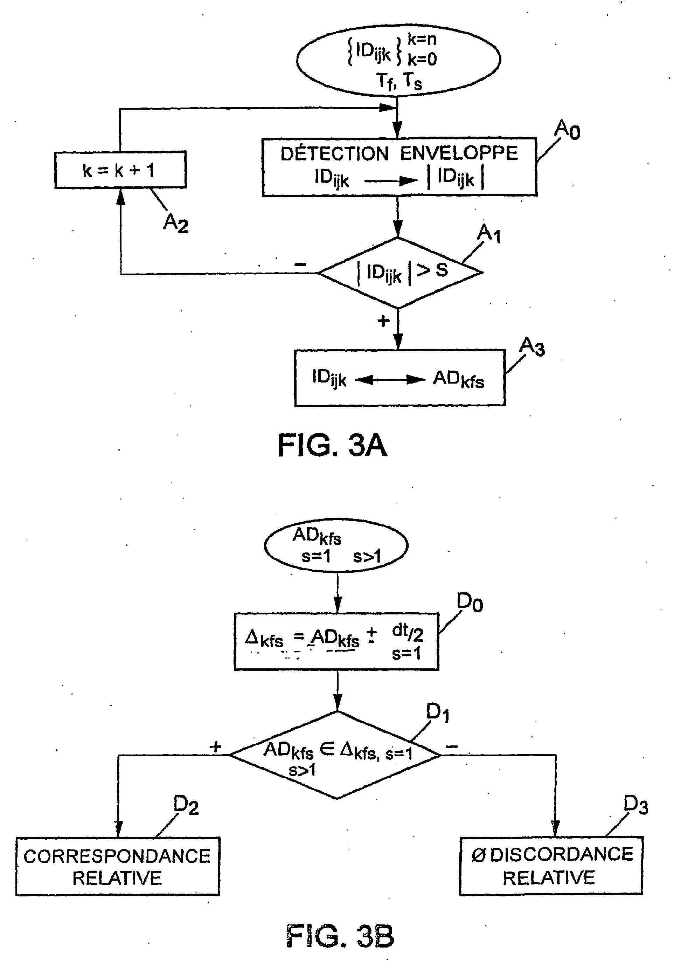

Une description plus détaillée d'un processus préférentiel de détermination d'un instant d'arrivée des impulsions d'un même temps symbole sera maintenant donnée en liaison avec la figure 3A.

Pour la détermination des instants d'arrivée des impulsions précitées, on considère la même hypothèse de départ que dans le cas de la figure 2, à savoir que l'on dispose de l'ensemble des impulsions $\{IDijk\}_{k=0}^{k=n}$ sur l'ensemble des temps symbole successifs $T_s$ et sur l'ensemble des trames $T_f$.

Le processus de détermination d'un instant d'arrivée, ainsi que représentée en figure 3A, consiste, en une étape $A_0$, à détecter l'enveloppe d'au moins une partie des impulsions, notamment de chaque impulsion: cette opération étant notée $ID_{ijk} \rightarrow |ID_{ijk}|$.

La détection d'enveloppes peut être effectuée sur le signal analogique reçu en réception à partir de tout circuit d'alignement ou de détection d'enveloppe connu de l'art antérieur, lequel pour cette raison, ne sera pas décrit en détail.

Dans la relation précédente, on comprend bien sûr que $|ID_{ijk}|$ désigne en fait l'amplitude du signal analogique de chaque impulsion détectée, c'est-à-dire la valeur de l'enveloppe de ces dernières.

L'étape $A_0$ peut alors être suivie d'une étape $A_1$ consistant à comparer la valeur d'enveloppe détectée $|ID_{ijk}|$ à la valeur S par comparaison de supériorité.

Sur réponse négative au test $A_1$, l'impulsion dont la valeur d'enveloppe n'a pas une amplitude suffisante vis-à-vis de la valeur de seuil est ignorée, cette opération étant représentée par l'étape $A_2$ de passage à l'impulsion suivante k=k+1, et par le retour à l'étape $A_0$ pour la détection de l'impulsion suivante.

Au contraire, sur réponse positive à l'étape $A_1$, cette dernière est suivie d'une étape $A_3$, laquelle consiste à associer au moins un instant d'arrivée à chaque impulsion détectée. Dans une variante de l'invention, cet instant est déterminé de manière relative et locale au temps symbole. Cette opération est notée par la relation $ID_{ijk} \leftrightarrow AD_{kfs}$.

On comprend, en effet, que la notion d'instant déterminé pour une impulsion détectée est avantageusement instant relatif en raison de la répétition des impulsions pour chaque temps symbole $T_s$ et donc de la date d'arrivée sensiblement identique des impulsions répétées sur chaque temps symbole, sauf existence d'une variabilité du canal, ainsi que mentionné précédemment dans la description.

Les instants d'arrivée peuvent être exprimés sous forme d'un nombre réel correspondant à une fraction du temps symbole $T_s$. Cette mesure est particulièrement avantageuse dans la mesure où la précision de l'instant d'arrivée est ainsi respectée, le temps symbole étant connu avec une grande précision au niveau de chaque récepteur.

Un processus préférentiel de mise en oeuvre de la confrontation relative des impulsions sera maintenant décrit en liaison avec la figure 3B.

Pour la mise en oeuvre de la confrontation de manière relative précitée, on considère les instants d'arrivée des hypothèses de trajets, c'est-à-dire, notamment, pour toute impulsion appartenant au temps symbole courant, instant d'arrivée $AD_{kfs}$ pour s=1, et les instants d'arrivée des impulsions datées, pour tout temps symbole suivant, soit instants d'arrivée $AD_{kfs}$ s>1.

L'opération de confrontation relative, représentée en figure 3b, consiste avantageusement, en une étape $D_0$, à établir des fenêtres temporelles de réception de largeur déterminée dt autour des instants d'arrivée des hypothèses de trajet, c'est-à-dire à la date d'arrivée $AD_{kfs,}$ s=1.

A l'étape $D_0$, cette opération est notée :

$$\Delta_{kfs,s)1} = AD_{kfs,s=1} \pm \frac{dt}{2}.$$

Dans la relation précédente dt représente la valeur de la largeur déterminée de la fenêtre temporelle considérée et $\Delta_{kfs}$ représente la fenêtre temporelle de réception considérée autour de l'instant d'arrivée des hypothèses de trajet à l'instant $AD_{kfs,\ s=1}$.

L'étape $D_0$ est suivie d'une étape $D_1$ consistant à vérifier si des impulsions du temps symbole suivant sont dans au moins une des fenêtres temporelles de réception.

L'opération de vérification à l'étape $D_1$ est notée selon la relation :

$$AD_{kfs,s)1} \in \Delta_{kfs,s=1}$$

Le test de l'étape $D_1$ permet de conclure à une correspondance relative sur vérification de la présence d'une impulsion du temps symbole suivant dans au moins une fenêtre temporelle en réponse positive au test $D_1$, cette correspondance relative étant constatée à l'étape $D_2$.

Au contraire, la réponse négative au test $D_1$ permet de constater la discordance relative en raison du fait qu'aucune des impulsions du temps symbole suivant ne sont dans la fenêtre temporelle de réception à l'étape $D_3$.

Différentes indications de mise en oeuvre préférentielle non limitative du processus de mise à jour et, en particulier, de la suite E indiquée en figure 2 seront maintenant données en liaison avec la figure 3C et la figure 3D

En premier lieu, en référence à la figure 2, on indique que l'étape $E_2$ de génération d'une nouvelle hypothèse de trajet pour la mise à jour de toute nouvelle hypothèse de trajet peut consister avantageusement pour toute discordance relative d'au moins une impulsion de temps symbole suivant, associée à la nouvelle hypothèse de trajet, avec les hypothèses de trajet existantes à affecter à l'impulsion de temps symbole suivant et à la nouvelle hypothèse de trajet un score initial. On comprend, bien sûr, que toute nouvelle hypothèse de trajet peut être ainsi définie par l'affectation de la valeur du score initial, afin d'insérer toute nouvelle hypothèse de trajet dans l'ensemble des hypothèses de trajet.

Dans un mode de mise en oeuvre préférentiel non limitatif, et ceci afin d'améliorer la précision de détection du procédé objet de la présente invention, la mise à jour du score affecté à chaque hypothèse de trajet, après comparaison sur N temps symbole suivant, peut inclure avantageusement, ainsi que représenté en figure 3C, la fusion des hypothèses de trajet dont les fenêtres temporelles de réception se chevauchent, la date d'arrivée la plus récente et le score le plus élevé étant conservés et alloués à l'hypothèse de trajet fusionnée et retenue.

En outre, dans une variante de l'invention, et en référence à la figure 3C, le processus de mise à jour consiste également à effectuer la suppression des hypothèses de trajet dont le score attribué est devenu nul ou négatif. Cette étape de suppression des hypothèses de score nul ou négatif est effectuée sans fusions préalable des hypothèses de trajets dans une variante de l'invention. Si le score est décrémenté lors de correspondance relative, les hypothèses de trajets supprimées ne seront pas les hypothèses négatives mais positives.

L'ensemble des opérations précitées est représenté dans la figure précitée de la manière ci-après.

Suite à la mise en oeuvre de l'étape de confrontation relative, on dispose bien entendu des fenêtres temporelles de réception notées $\Delta_{kfs, s=1}$ pour le temps symbole courant et $\Delta_{k'fs, s>1}$ pour les temps symboles suivants.

On comprend, en particulier, que k' est une valeur qui peut correspondre à la valeur k de l'impulsion de temps symbole courant mais dont toutefois l'instant d'arrivée est légèrement différente en raison de la variabilité du canal de transmission d'un temps symbole au temps suivant.

Ainsi, en référence à la figure 3C, le processus de fusion des hypothèses de trajet dont les fenêtres temporelles de réception se chevauchent, peut consister à exécuter un test $E_3$, permettant de vérifier le chevauchement, c'est-à-dire l'intersection des fenêtres temporelles précitées selon la relation :

$$\Delta_{k'fs,s)1} \cap \Delta_{kfs,s=1} = \phi ?$$

La notion d'intersection peut consister, ainsi que mentionné précédemment, à effectuer des tests d'infériorité et ou de supériorité des valeurs limites des fenêtres correspondantes, par exemple.

L'étape $E_3$ sur réponse négative au test précité est suivie d'une étape $E_4$ de retour au test $E_3$, avec incrémentation de la valeur k à la valeur k+1, de façon à passer à l'impulsion suivante. Ce processus permet ainsi de vérifier l'absence de chevauchement des fenêtres temporelles associées aux impulsions de rang k considéré.

Au contraire, sur réponse positive au test $E_3$, une étape $E_5$ est appelée correspondant à la fusion proprement dite des fenêtres temporelles précitées, selon la relation symbolique :

$$\Delta_{k'fs,s)1} \equiv \Delta_{kfs,s=1}$$

A l'opération $E_5$ est ensuite associée une opération $E_6$, consistant à attribuer à la fenêtre fusionnée à l'étape $E_5$ la date d'arrivée la plus récente, puis une étape $E_7$ consistant à affecter à la fenêtre fusionnée le score le plus élevé des deux fenêtres initiales.

Ces opérations sont représentées par les relations :

$$AD_{kfs,s=1} = \min\{AD_{kfs}, AD_{k'fs}\} \text{ pour l'étape } \mathbf{E_6,}$$

et

$$SC_{k'fs} = \sup\{SC_{kfs}, SC_{k'fs}\} \text{ pour l'étape } \dot{\mathbf{E}}_{7}.$$

En ce qui concerne la suppression des hypothèses de trajet, dont le score attribué est devenu nul ou négatif, cette opération est réalisée à l'étape $E_8$, consistant à comparer chaque valeur de score attribué $SC_{kfs}$ à la valeur 0 par comparaison d'infériorité.

Sur réponse positive au test de l'étape $E_8$, noté $\exists\, SC_{kfs} \leq 0?$, l'hypothèse de trajet correspondante notée $PHT_k$, dont le score attribué est devenu nul ou négatif, est alors supprimée à l'étape $E_9$. L'étape $E_9$ est suivie d'un retour à l'étape $E_3$ par l'intermédiaire de l'étape $E_4$ pour le passage à toute impulsion suivante par incrémentation k=k+1.

Au contraire, sur réponse négative au test $E_8$, le retour à l'étape $E_3$ est effectué directement par l'intermédiaire de l'étape $E_4$ pour passage à l'impulsion de rang suivant.

Outre l'élimination des fenêtres de trajet en chevauchement, c'est-à-dire en définitive des impulsions dont la distance sur un temps symbole n'est pas suffisante, le procédé objet de l'invention, tel que représenté en figure 3D, peut consister avantageusement en une mise à jour du score affecté à chaque hypothèse de trajet, de façon à obtenir les meilleures hypothèses de trajet, c'est-à-dire les plus significatives et finalement les plus vraisemblables.

Dans ce but, une variante du procédé objet de l'invention comporte une étape d'élimination des hypothèses de trajet dont le score est inférieur à un pourcentage déterminé du score le plus élevé. Une autre variante du procédé objet de l'invention comporte une étape de classement par ordre de score décroissant des hypothèses de trajet restantes. Une variante additionnelle du procédé objet de l'invention comporte l'étape d'élimination suivie de l'étape de classement.

Un tel processus illustré en figure 3D peut être exécuté sur des scores des hypothèses de trajet retenus suite à la mise en oeuvre des étapes des figures 3B et 3C notamment.

Ainsi on dispose de tous les scores $SC_{kfs, s=1}$ pour le temps symbole courant, lesquels, à titre de simplification sont notés $SC_k$.

Le processus consiste alors en une étape $E_{10}$ à déterminer le score le plus élevé. Ce score est noté :

$$SC_M = \sup \left\{ SC_k \right\}_{s=1}$$

Cette opération est réalisée grâce à une procédure de tri de valeur numérique des scores classique.

L'étape $E_{10}$ est suivie d'une étape de test $E_{11}$ consistant à discriminer toutes les hypothèses de trajet dont le score est inférieur à un pourcentage P du score le plus élevé $SC_M$. Le test de l'étape $E_{11}$ est représenté par la relation :

$$\exists \ \left\{ AD_{kfs}, SC_k \right\} \quad SC_k \langle P \times SC_M \ ?$$

Sur réponse positive au test $E_{11}$ précité, on procède à la suppression de la valeur de score correspondante $SC_k$ en une étape $E_{12}$, l'ensemble des scores restant étant noté $\{\overline{SC_k}\}_{s=1}$.

Après la suppression de tous les scores ayant satisfait au test de l'étape $E_{11}$, on procède alors au classement par ordre de score décroissant des hypothèses de trajet restantes, cette opération étant notée :

$$\text{CLASSEMENT} \ \left\{ \overline{SC_k} \right\}_{s=1} \ \text{à l'étape } \mathbf{E_{13}}.$$

Bien entendu, lorsque, au test de l'étape $E_{11}$, aucun score ne satisfait au test de comparaison d'infériorité précité, alors on passe directement à l'étape de tri $E_{13}$, le classement intervenant sur l'ensemble des scores et hypothèses de trajet restantes.

Le mode opératoire tel que représenté en figure 3D apparaît particulièrement avantageux, dans la mesure où il permet, en outre, de sélectionner un nombre déterminé d'hypothèses de trajet parmi celles dont le score est le plus élevé, c'est-à-dire suite au classement effectué à l'étape $E_{13}$.

Ceci permet d'assurer la communication entre l'émission par impulsion et la réception sur la base des trajets de propagation dont les scores sont les plus élevés et qui finalement représentent les trajets de propagation les plus fiables, notamment parce que ces trajets sont les plus stables.

Enfin, le procédé objet de l'invention peut comporter, en outre, une étape de validation de chaque hypothèse de trajet comme trajet d'au moins une partie des impulsions.

Dans ce but, la validation précitée peut être effectuée en recourant à la méthode de synchronisation à la réception telle que décrite précédemment dans la description.

Toutefois, dans le cas où la profondeur du canal de transmission est faible (inférieure à une valeur prédéterminée), la profondeur du canal étant définie comme le temps séparant la première impulsion détectable de la dernière impulsion détectable sur le temps symbole, l'étape de validation peut être mise en oeuvre pour au moins une partie des impulsions, voire chaque impulsion, associée à l'impulsion d'un temps symbole sur laquelle la réception est synchronisée. Les impulsions sont alors limitées à celles dont l'écart de trajet en temps de propagation vis-à-vis des impulsions principales (impulsions auxquelles est associé un trajet sur lequel la synchronisation a été effectuée), est inférieur à la profondeur du canal de transmission.

La réception étant synchronisée, la séquence de synchronisation liée à chacune des impulsions principales candidates est connu. Cette information permet d'identifier un nombre réduit de synchronisations.

Il est alors possible de communiquer la position de l'impulsion détectée ainsi que les hypothèses probables de position de cette dernière à la fonction de synchronisation. Si cette dernière réussit à acquérir une synchronisation, ce qui peut toutefois nécessiter plusieurs temps symboles $T_s$, sur ces bases, cela signifie bien qu'un nouveau trajet a été détecté et, bien entendu, est exploitable.

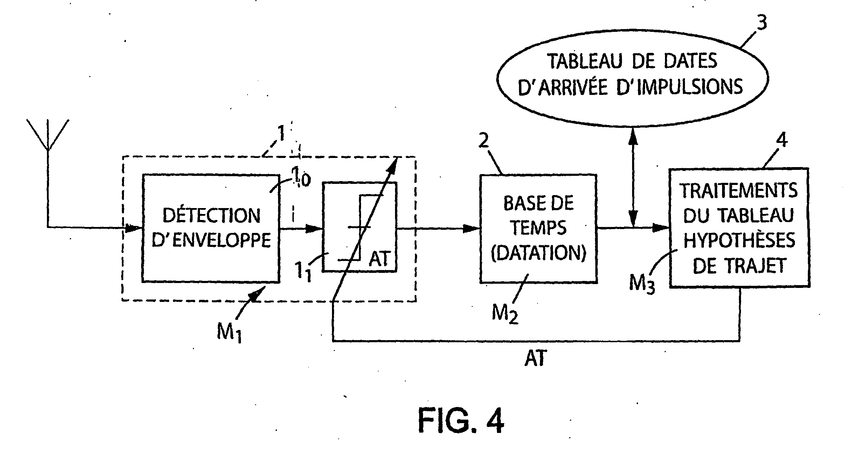

Une description plus détaillée d'un dispositif mis en oeuvre, notamment par un récepteur et d'un tel récepteur dans un exemple d'application consistant au cas de la réception ultra large bande, de signaux radio émis par impulsion, exécutant le procédé de détection de trajets de propagation en transmission par impulsions conforme à l'objet de l'invention, sera maintenant donnée en liaison avec la figure 4.

En référence à la figure précitée, on indique qu'outre une antenne de réception d'impulsions, notamment d'impulsions directes et d'impulsions secondaires, ce récepteur comporte un module de synchronisation de la réception sur une impulsion principale reçue, ce module de synchronisation pouvant, par exemple, être constitué par tout module existant d'un récepteur classique, sans sortir du cadre de l'objet de la présente invention. Un tel module, pour cette raison, n'est pas représenté au dessin en figure 4.

Le dispositif de détection de trajets objet de l'invention mis en oeuvre par le récepteur inclut au moins un module 1 de détection de l'enveloppe des impulsions reçues vis-à-vis d'une valeur de seuil, permettant d'engendrer des impulsions détectées. Ce module peut consister en un sous-module $1_0$ de détection de l'enveloppe et un sous-module $1_1$, effectuant la comparaison des signaux d'enveloppe à la valeur de seuil, notée AT sur la figure 4 précitée.

Le module 1 de détection de l'enveloppe des impulsions est suivi d'un module 2 de détermination des instants d'arrivée d'au moins une partie des impulsions détectées d'un temps symbole, laquelle peut être délivrée sous forme d'une impulsion calibrée au module 2 précité, cet instant d'arrivée pouvant être relatif et local au temps symbole. Dans une variante de l'invention, le module 2 permet en outre la mémorisation d'un tableau des instants d'arrivée, référencé 3 sur la figure 4 précitée. La forme et le contenu des informations du tableau des instants d'arrivée correspondent à ceux indiqués précédemment dans la description.

En outre, ainsi que représenté sur la figure 4, le dispositif de détection de trajets, objet de l'invention, comprend un module 4 de traitement des hypothèses comporte des moyens de génération d'hypothèses de trajets en affectant un score initial à des impulsions datées, des moyens de confrontation relative des instants d'arrivée des impulsions avec les hypothèses et des moyens de mise à jour des scores en fonction du résultat de la confrontation. Par exemple, à partir du tableau des instants d'arrivée 3, le module 4 construit un tableau des hypothèses de trajet par affectation, à chaque impulsion détectée sur le temps symbole courant, d'un score initial.

Le mode opératoire du module 1 de détection de l'enveloppe des impulsions reçues, vis-à-vis d'une valeur de seuil, du module 2 de détermination des instants d'arrivée des impulsions détectées et du module 4 de traitement des hypothèses de trajet, est exécuté conformément au procédé de l'invention, tel que décrit précédemment dans la description.

De manière particulièrement avantageuse, on indique que la valeur de seuil AT est une valeur adaptative pour chaque temps symbole, par exemple, en fonction d'une valeur d'ajustement de la valeur de seuil.

La valeur de seuil peut être ajustée conformément aux solutions de l'art antérieur, pour la détection d'impulsions à taux de fausse alarme constant, CFAR pour Constant False Alarm Rate en anglais. Selon un autre aspect, la valeur d'ajustement de la valeur de seuil peut être représentative de la densité des hypothèses de trajet.

On comprend, en particulier, en référence à la figure 4, que le module 4 de traitement des hypothèses de trajet comporte, par exemple, une routine d'évaluation de la valeur de seuil pour chaque temps symbole suivant le temps symbole courant, en fonction de la densité des hypothèses de trajet. Ainsi, à titre d'exemple non limitatif, la valeur de seuil peut être diminuée en fonction du nombre d'hypothèses de trajet détectées, compte tenu de la diminution prévisible de l'énergie contenue dans chaque impulsion correspondant à ces hypothèses de trajet, et, au contraire, augmentée lors de la diminution de la densité précitée. Ce mode opératoire permet de tenir compte de la variabilité du canal de transmission.

Enfin, l'invention couvre également un produit de programme d'ordinateur, enregistré sur un support de mémorisation, pour exécution par le processeur d'un ordinateur ou d'un récepteur dédié.

Le produit de programme d'ordinateur correspondant est remarquable en ce qu'il comprend une suite d'instructions permettant la mise en oeuvre du procédé de détection de trajet de propagation en transmission par impulsions, tel que décrit précédemment dans la description, en liaison avec les figures 2 à 3D.

De préférence, ainsi que représenté en outre en figure 4, le produit de programme d'ordinateur objet de l'invention est implanté, sous forme modulaire, dans un récepteur ultra large bande, conforme à l'objet de l'invention.

Ainsi, il inclut au moins un module logiciel $M_1$ de détection de l'enveloppe des impulsions reçues vis-à-vis d'une valeur de seuil et permettant d'engendrer des impulsions détectées, le module de programme logiciel $M_1$ précité pouvant être subdivisé en un sous-module de détection d'enveloppe et un sous-module de comparaison à la valeur de seuil adaptative AT.

Il comporte en outre un module logiciel $M_2$ de calcul et d'attribution, à chaque impulsion détectée, d'une date ou instant d'arrivée relative et locale au temps symbole et de mémorisation d'un tableau des dates d'arrivée. Le module logiciel correspondant permet l'attribution d'une date d'arrivée précise locale et relative au temps symbole pour chaque impulsion détectée.

Enfin, le produit de programme, objet de l'invention, comprend un module logiciel $M_3$ de construction et d'actualisation à partir du tableau des dates d'arrivée d'un tableau des hypothèses de trajet par affectation, à chaque impulsion détectée sur le temps symbole courant, d'un score d'une valeur spécifique. Le module $M_3$ est implanté avantageusement dans le module de traitement du tableau des hypothèses de trajet portant la référence 4 sur la figure 4 précitée.

**Revendications**

1. Procédé de détection de trajets de propagation en transmission par impulsions, le signal reçu incluant des impulsions sur des temps symboles, **caractérisé en ce que,** suite à la synchronisation de la réception desdites impulsions sur des impulsions auxquelles est associé un trajet, ledit procédé inclut au moins les étapes consistant à :

   - déterminer les instants d'arrivée d'au moins une partie desdites impulsions d'un même temps symbole courant ;
   - générer des hypothèses de trajet en affectant aux impulsions datées sur ledit temps symbole courant un score initial ;
   - déterminer les instants d'arrivée d'au moins une partie desdites impulsions d'au moins un temps symbole suivant ledit temps symbole courant ;
   - confronter de manière relative les instants d'arrivée desdites impulsions dudit temps symbole suivant avec les instants d'arrivée des hypothèses de trajet ;
   - mettre à jour les scores en fonction du résultat de la confrontation relative.

2. Procédé selon la revendication 1, **caractérisé en ce que** la détermination d'un instant d'arrivée desdites impulsions consiste au moins à :

   - détecter l'enveloppe desdites impulsions vis-à-vis d'une valeur de seuil ; et, sur détection positive,
   - associer au moins un instant d'arrivée à une impulsion détectée.

3. Procédé selon la revendication 1 ou 2, **caractérisé en ce que** ladite confrontation relative consiste au moins à :

   - établir des fenêtres temporelles de largeur déterminée autour des instants d'arrivée des hypothèses de trajet ;
   - vérifier si lesdites impulsions du temps symbole suivant sont dans au moins une desdites fenêtres temporelles.

4. Procédé selon l'une des revendications 1 à 3, **caractérisé en ce que** ledit procédé inclut au moins la génération d'une nouvelle hypothèse de trajet, lors d'une discordance relative entre l'instant d'arrivée d'une impulsion du temps symbole suivant et les instants d'arrivée des hypothèses de trajet en affectant à ladite impulsion datée du temps symbole suivant un score initial.

5. Procédé selon l'une des revendications 1 à 4, **caractérisé en ce que** la mise à jour du score affecté à chaque hypothèse de trajet, après comparaison sur N temps symboles suivants inclut au moins :

   - la fusion des hypothèses de trajet dont les fenêtres temporelles de réception se chevauchent, l'instant d'arrivée le plus récent et le score le plus élevé étant conservés.

6. Procédé selon l'une des revendications 1 à 5, **caractérisé en ce que** celui-ci consiste à actualiser les hypothèses de trajet et leur score en réitérant les étapes de génération d'hypothèses de trajet et d'affectation de score, par substitution audit temps symbole courant d'un temps symbole suivant ledit temps symbole courant.

7. Procédé selon l'une des revendications 1 à 6, **caractérisé en ce que** celui-ci consiste à remplacer le temps symbole par une subdivision temporelle du temps symbole.

8. Procédé de réception mettant en oeuvre le procédé selon l'une des revendications 1 à 7, **caractérisé en ce que** celui-ci consiste en outre à sélectionner un nombre déterminé d'hypothèses de trajet parmi celles dont le score est le plus élevé, pour assurer la réception.

9. Dispositif de détection de trajets de propagation en transmission par impulsions, le signal reçu incluant des impulsions sur des temps symbole, **caractérisé en ce que,** outre un module de synchronisation de la réception de ces impulsions sur des impulsions auxquelles est associé un trajet, ledit dispositif comporte au moins :

- des moyens dé détermination des instants d'arrivée d'au moins une partie des impulsions d'un même temps symbole courant ;
- des moyens de génération d'hypothèses de trajet, lesdits moyens générateurs affectant aux impulsions datées sur le temps symbole courant un score initial ;
- des moyens de détermination des instants d'arrivée d'au moins une partie des impulsions d'au moins un temps symbole suivant ce temps symbole courant ;
- des moyens de confrontation relative des instants d'arrivée des impulsions du temps symbole suivant avec les instants d'arrivée des hypothèses de trajet ;
- des moyens de mise à jour des scores en fonction du résultat de la confrontation relative.

10. Récepteur de signaux émis par impulsions, comprenant au moins une antenne de réception d'impulsions, **caractérisé en ce que,** outre des moyens de synchronisation de la réception sur une impulsion reçue, ledit récepteur inclut au moins :

- des moyens de détermination des instants d'arrivée d'au moins une partie des impulsions d'un même temps symbole courant;
- des moyens de génération d'hypothèses de trajet; lesdits moyens de génération affectant aux impulsions datées sur le temps symbole courant un score initial ;
- des moyens de détermination des instants d'arrivée d'un moins une partie des impulsions d'un moins un temps symbole suivant le temps symbole courant;
- des moyens de confrontation relative des instants d'arrivée des impulsions d'un temps symbole suivant avec les instants d'arrivée des hypothèses de trajet ;
- des moyens de mise à jour des scores en fonction du résultat de la confrontation relative.

11. Programme d'ordinateur enregistré sur un support de mémorisation, **caractérisé en ce qu'**il comprend une suite d'instructions permettant la mise en oeuvre du procédé de détection de trajets selon l'une des revendications 1 à 8, lorsque ledit programme est exécuté par un processeur.

## Claims

1. Method for detecting propagation paths in pulse transmission, the signal received including pulses over symbol times, **characterized in that,** following the synchronization of the reception of said pulses to pulses with which a path is associated, said method includes at least the steps consisting in:

- determining the arrival instants of at least one part of said pulses of one and the same current symbol time;
- generating path assumptions by assigning to the pulses dated on said current symbol time an initial score;
- determining the arrival instants of at least one part of said pulses of at least one symbol time following said current symbol time;
- collating in a relative manner the arrival instants of said pulses of said following symbol time with the arrival instants of the path assumptions;
- updating the scores as a function of the result of the relative collation.

2. Method according to Claim 1, **characterized in that** the determination of an arrival instant of said pulses consists at least in:

- detecting the envelope of said pulses in relation to a threshold value; and, on positive detection,
- associating at least one arrival instant with a detected pulse.

3. Method according to Claim 1 or 2, **characterized in that** said relative collation consists at least in:

- establishing time windows of determined width about the arrival instants of the path assumptions;
- verifying whether said pulses of the following symbol time are in at least one of said time windows.

4. Method according to one of Claims 1 to 3, **characterized in that** said method includes at least the generation of a new path assumption, upon a relative inconsistency between the arrival instant of a pulse of the following symbol time and the arrival instants of the path assumptions by assigning an initial score to said pulse dated from the following symbol time.

5. Method according to one of Claims 1 to 4,
**characterized in that** the updating of the score assigned to each path assumption, after comparison over N following symbol times includes at least:

- the merging of the path assumptions whose reception time windows overlap, the most recent arrival instant and the highest score being preserved.

6. Method according to one of Claims 1 to 5,
**characterized in that** it consists in updating the path assumptions and their score by repeating the steps of path assumption generation and score assignment, by substituting said current symbol time with a symbol time following said current symbol time.

7. Method according to one of Claims 1 to 6,
**characterized in that** it consists in replacing the symbol time with a temporal subdivision of the symbol time.

8. Reception method implementing the method according to one of Claims 1 to 7, **characterized in that** it furthermore consists in selecting a determined number of path assumptions from among those whose score is the highest, to ensure reception.

9. Device for detecting propagation paths in pulse transmission, the signal received including pulses over symbol times, **characterized in that,** in addition to a module for synchronizing the reception of these pulses to pulses with which a path is associated, said device comprises at least:

- means for determining the arrival instants of at least one part of the pulses of one and the same current symbol time;
- means for generating path assumptions, said generating means assigning to the pulses dated on the current symbol time an initial score;
- means for determining the arrival instants of at least one part of the pulses of at least one symbol time following this current symbol time;
- means for relative collation of the arrival instants of the pulses of the following symbol time with the arrival instants of the path assumptions;
- means for updating the scores as a function of the result of the relative collation.

10. Receiver of signals emitted by pulses, comprising at least one antenna for receiving pulses, **characterized in that,** in addition to the means for synchronizing reception to a pulse received, said receiver includes at least:

- means for determining the arrival instants of at one least part of the pulses of one and the same current symbol time;
- means for generating path assumptions; said generating means assigning to the pulses dated on the current symbol time an initial score;
- means for determining the arrival instants of at least one part of the pulses of at least one symbol time following this current symbol time;
- means for relative collation of the arrival instants of the pulses of a following symbol time with the arrival instants of the path assumptions;
- means for updating the scores as a function of the result of the relative collation.

11. Computer program recorded on a storage medium, **characterized in that** it comprises a series of instructions allowing the implementation of the method for detecting paths according to one of Claims 1 to 8, when said program is executed by a processor.

**Patentansprüche**

1. Verfahren zur Erfassung von Ausbreitungswegen bei Impulsübertragung, wobei das empfangene Signal Impulse in Symbolzeiten enthält, **dadurch gekennzeichnet, dass** nach der Synchronisierung des Empfangs der Impulse auf Impulse, denen ein Weg zugeordnet ist, das Verfahren mindestens die folgenden Schritte enthält:

- Bestimmung der Ankunftszeitpunkte mindestens eines Teils der Impulse der gleichen laufenden Symbolzeit;

- Erzeugung der Weghypothesen, indem den auf die laufende Symbolzeit datierten Impulsen ein Anfangs-Score zugewiesen wird;
- Bestimmung der Ankunftszeitpunkte mindestens eines Teils der Impulse mindestens einer auf die laufende Symbolzeit folgenden Symbolzeit;
- relative Konfrontation der Ankunftszeitpunkte der Impulse der folgenden Symbolzeit mit den Ankunftszeitpunkten der Weghypothesen;
- Aktualisierung der Scores in Abhängigkeit von dem Ergebnis der relativen Konfrontation.

2. Verfahren nach Anspruch 1, **dadurch gekennzeichnet, dass** die Bestimmung eines Ankunftszeitpunkts der Impulse mindestens darin besteht:

- die Hüllkurve der Impulse gegenüber einem Schwellwert zu erfassen; und bei einer positiven Erfassung,
- mindestens einen Ankunftszeitpunkt einem erfassten Impuls zuzuordnen.

3. Verfahren nach Anspruch 1 oder 2, **dadurch gekennzeichnet, dass** die relative Konfrontation mindestens darin besteht:

- Zeitfenster bestimmter Breite um die Ankunftszeitpunkte der Weghypothesen herum festzulegen;
- zu überprüfen, ob die Impulse der folgenden Symbolzeit sich in mindestens einem der Zeitfenster befinden.

4. Verfahren nach einem der Ansprüche 1 bis 3, **dadurch gekennzeichnet, dass** das Verfahren mindestens die Erzeugung einer neuen Weghypothese bei einer relativen Diskordanz zwischen dem Ankunftszeitpunkt eines Impulses der folgenden Symbolzeit und den Ankunftszeitpunkten der Weghypothesen enthält, indem dem in der folgenden Symbolzeit datierten Impuls ein Anfangs-Score zugewiesen wird.

5. Verfahren nach einem der Ansprüche 1 bis 4, **dadurch gekennzeichnet, dass** die Aktualisierung des jeder Weghypothese zugewiesenen Scores nach Vergleich über N folgende Symbolzeiten mindestens enthält:

- die Fusion der Weghypothesen, deren Empfangs-Zeitfenster einander überlappen, wobei der neueste Ankunftszeitpunkt und der höchste Score beibehalten werden.

6. Verfahren nach einem der Ansprüche 1 bis 5, **dadurch gekennzeichnet, dass** es darin besteht, die Weghypothesen und ihren Score zu aktualisieren, indem die Schritte der Erzeugung von Weghypothesen und der Score-Zuweisung durch Ersetzen der laufenden Symbolzeit durch eine auf die laufende Symbolzeit folgende Symbolzeit wiederholt werden.

7. Verfahren nach einem der Ansprüche 1 bis 6, **dadurch gekennzeichnet, dass** es darin besteht, die Symbolzeit durch eine zeitliche Unterteilung der Symbolzeit zu ersetzen.

8. Empfangsverfahren, das das Verfahren nach einem der Ansprüche 1 bis 7 anwendet, **dadurch gekennzeichnet, dass** es außerdem darin besteht, eine bestimmte Anzahl von Weghypothesen unter denjenigen auszuwählen, deren Score am höchsten ist, um den Empfang zu gewährleisten.

9. Vorrichtung zur Erfassung von Ausbreitungswegen bei Impulsübertragung, wobei das empfangene Signal Impulse in Symbolzeiten enthält, **dadurch gekennzeichnet, dass** die Vorrichtung neben einem Modul zur Synchronisation des Empfangs dieser Impulse auf Impulse, denen ein Weg zugeordnet ist, mindestens aufweist:

- Mittel zur Bestimmung der Ankunftszeitpunkte mindestens eines Teils der Impulse einer gleichen laufenden Symbolzeit;
- Mittel zur Erzeugung von Weghypothesen, wobei die Erzeugungsmittel den auf die laufende Symbolzeit datierten Impulsen einen Anfangs-Score zuweisen;
- Mittel zur Bestimmung der Ankunftszeitpunkte mindestens eines Teils der Impulse mindestens einer auf diese laufende Symbolzeit folgenden Symbolzeit;
- Mittel zur relativen Konfrontation der Ankunftszeitpunkte der Impulse der folgenden Symbolzeit mit den Ankunftszeitpunkten der Weghypothesen;

- Mittel zur Aktualisierung der Scores in Abhängigkeit vom Ergebnis der relativen Konfrontation.

**10.** Empfänger von durch Impulse gesendeten Signalen, der mindestens eine Impulsempfangsantenne aufweist, **dadurch gekennzeichnet, dass** der Empfänger neben den Mitteln zur Synchronisation des Empfangs auf einen empfangenen Impuls mindestens enthält:

- Mittel zur Bestimmung der Ankunftszeitpunkte mindestens eines Teils der Impulse einer gleichen laufenden Symbolzeit;
- Mittel zur Erzeugung von Weghypothesen; wobei die Erzeugungsmittel den auf die laufende Symbolzeit datierten Impulsen einen Anfangs-Score zuweisen;
- Mittel zur Bestimmung der Ankunftszeitpunkte mindestens eines Teils der Impulse mindestens einer auf diese laufende Symbolzeit folgenden Symbolzeit;
- Mittel zur relativen Konfrontation der Ankunftszeitpunkte der Impulse einer folgenden Symbolzeit mit den Ankunftszeitpunkten der Weghypothesen;
- Mittel zur Aktualisierung der Scores in Abhängigkeit von dem Ergebnis der relativen Konfrontation.

**11.** Auf einem Speicherträger gespeichertes Computerprogramm, **dadurch gekennzeichnet, dass** es eine Folge von Anweisungen enthält, die die Anwendung des Verfahrens zur Wegerfassung nach einem der Ansprüche 1 bis 8 erlauben, wenn das Programm von einem Prozessor ausgeführt wird.

FIG. 1

$$\left\{ID_{ijk}\right\}_{k=0}^{k=n}$$
$$T_f, T_s$$

$T_s/r \cong T_s$

CONSTRUCTION TABLEAU DATES ARRIVÉE

$$\left\{ID_{ijk,\,fs}\right\} \longrightarrow \left\{AD_{kfs}\right\}_{k=0}^{k=n}{}_{s=1}$$

A

CONSTRUCTION TABLEAU HYPOTHÈSES TRAJETS

$$\left\{AD_{kfs}\right\}_{\substack{k=0 \\ s=1}}^{k=n} \longrightarrow PHT\left\{AD_{kfs}, SC_{kfs}\right\}_{s=1}$$

B

CONSTRUCTION TABLEAU DATES D'ARRIVÉE

$$\left\{ID_{ijk,\,fs}\right\}_{s>1} \longrightarrow \left\{AD_{kfs}\right\}_{k=0}^{k=n}{}_{s>1}$$

C

D
$$\exists AD_{lfs,s>1} | AD_{lfs,s>1} \cong AD_{kfs,s=1}, 0 \leq l, k \leq n?$$

+  −

$$\exists AD_{lfs,s>1} | AD_{lfs,s>1} \neq AD_{kfs,s=1}, 0 \leq k \leq n?$$

−  +

$E_1$

DÉCRÉMENTATION
$$SC_{kfs} = SC_{kfs} - 1$$

$$\exists AD_{lfs,s>1} | AD_{lfs,s>1} \neq AD_{kfs,s=1}, 0 \leq l \leq n?$$

$E_0$

$E$ 

INCRÉMENTATION
$$SC_{kfs} = SC_{kfs} + 1$$

$E_2$ 

GÉNÉRATION NOUVELLE
HYPOTHÈSE TRAJET

SUITE E
FIGURE 3C

FIG. 2

F

$$s = s + 1$$

$$\left\{ \mathrm{ID}_{ijk} \right\}_{k=0}^{k=n}$$
$$T_f, T_s$$

DÉTECTION ENVELOPPE

$\mathrm{ID}_{ijk} \longrightarrow |\mathrm{ID}_{ijk}|$

$A_0$

$k = k + 1$

$A_2$

$- \quad |\mathrm{ID}_{ijk}| > S \quad A_1$

$+$

$\mathrm{ID}_{ijk} \longleftrightarrow \mathrm{AD}_{kfs}$

$A_3$

## FIG. 3A

$$\mathrm{AD}_{kfs}$$
$$s=1 \qquad s>1$$

$\Delta_{kfs} = \mathrm{AD}_{kfs} \pm \dfrac{dt/2}{s=1}$

$D_0$

$+ \qquad \mathrm{AD}_{kfs} \in \Delta_{kfs, \, s=1} \qquad -$
$s>1$

$D_1$

CORRESPONDANCE
RELATIVE

$D_2$

Ø DISCORDANCE
RELATIVE

$D_3$

## FIG. 3B

FIG. 3C

$E_4$

$k = k + 1$

SUITE E
$\Delta_{kfs}$ $\quad$ $\Delta_{k'fs}$
$s=1$ $\quad$ $s>1$

$E_3$

$\Delta_{k'fs} \cap \Delta_{kfs} \equiv \emptyset$?
$s>1$ $\quad$ $s=1$

$-$

$+$

$E_5$

$\Delta_{k'fs} \equiv \Delta_{kfs}$
$s>1$ $\quad$ $s=1$

$E_6$

$AD_{kfs} = \min\{AD_{kfs}, AD_{k'fs}\}$
$s=1$

$E_7$

$SC_{k'fs} = \sup\{SC_{kfs}, SC_{k'fs}\}$

$E_8$

$E_9$

$+$

$\exists\, SC_{kfs} \leq 0$? $\quad -$

SUPPRESSION
PHTk

$SC_{kfs} = SC_k$
$s=1$

$E_{10}$

$SC_M = \sup\{SC_k\}_{s=1}$

$E_{11}$

$-$

$\exists \{AD_{kfs}, SC_k\}$
$SC_k < P \cdot SC_M$?

$+$

$E_{12}$

SUPPRESSION $SC_k$
RESTE $\{\overline{SC_k}\}_{s=1}$

$E_{13}$

CLASSEMENT $\{\overline{SC_k}\}_{s=1}$

FIG. 3D

EP 1 949 548 B1

TABLEAU DE DATES D'ARRIVÉE D'IMPULSIONS — 3

TRAITEMENTS DU TABLEAU HYPOTHÈSES DE TRAJET — 4 — $M_3$

BASE DE TEMPS (DATATION) — 2 — $M_2$

AT

DÉTECTION D'ENVELOPPE — 1 — $1_0$ — $1_1$ — AT — $M_1$

**FIG. 4**

## RÉFÉRENCES CITÉES DANS LA DESCRIPTION

**Documents brevets cités dans la description**

- WO 2004066517 A
- US 5832035 A

- FR 0501283